# EUROPEAN PATENT SPECIFICATION

(11) **EP 4 141 343 B1**
(45) Date of publication and mention of the grant of the patent: **17.09.2025**
(21) Application number: 21793723.4
(22) Date of filing: 04.02.2021
(51) Int. Cl.: F24H 4/02, F24H 9/20, F24D 15/04, F24H 4/04, F24H 15/215, F24H 15/219, F24H 15/223, F24H 15/248, F24D 17/02, F24D 17/00, F24H 15/315, F24H 15/32, F24H 15/335, F25B 47/02

(54) **WATER HEATING UNIT**
WASSERERHITZEREINHEIT
UNITÉ DE CHAUFFAGE D'EAU

(30) Priority: 23.04.2020 CN 202010327616
(43) Date of publication of application: 01.03.2023
(73) Proprietor: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: ZHANG, Baoku, Qingdao, Shandong 266101 (CN); HAN, Weitao, Qingdao, Shandong 266101 (CN); HAN, Yefei, Qingdao, Shandong 266101 (CN); MAO, Shoubo, Qingdao, Shandong 266101 (CN); WANG, Chungang, Qingdao, Shandong 266101 (CN)
(74) Representative: Budde Schou A/S
(86) International application number: PCT/CN2021/075275
(87) International publication number: WO 2021/212962

(56) References cited:
- EP-A1- 2 434 231
- EP-A2- 2 713 112
- CN-A- 101 424 451
- CN-A- 102 445 027
- CN-A- 104 633 925
- CN-A- 104 964 431
- CN-A- 105 466 034
- CN-A- 107 687 707
- CN-A- 107 687 707
- CN-A- 108 375 101
- CN-A- 111 609 552
- CN-A- 111 609 561
- CN-U- 204 987 463
- JP-A- 2005 024 242
- US-B2- 9 163 855

## Description

### FIELD OF THE INVENTION

The present d invention belongs to the technical field of water heaters, and specifically relates to a hot water unit.

### BACKGROUND OF THE INVENTION

Chinese patent publication No. CN108019938A discloses a household normal-pressure heat pump type water heater, which includes a heat preservation water tank, a heat exchanger and a heat pump system; the heat exchanger is provided with a refrigerant passage and a water flow passage exchanging heat with each other, the refrigerant passage is connected with the heat pump system to form a loop, and a water inlet hole of the heat preservation water tank communicates with an outlet of the water flow passage; port *a* of an electric three-way regulating valve communicates with a water outlet hole of the heat preservation water tank, port *b* of the electric three-way communicates with an inlet of the water flow passage through a water pump, and port c of the electric three-way communicates with a water inflow pipe; a water outflow pipe is also arranged between the water outlet hole of the heat preservation water tank and port *a* of the electric three-way regulating valve.

When the above existing water heater is in use, after the user uses hot water in the heat preservation water tank from the water outflow pipe, port b and port c of the electric three-way valve are conducted, and the water pump provides power for tap water supplied from the water inflow pipe to enter the water flow passage. The water in the water flow passage enters the heat preservation water tank after one-time heat exchange with the refrigerant passage. After the water is replenished, port *a* and port c of the electric three-way valve are conducted, and the water pump provides power for the water in the water outlet hole of the heat preservation water tank to enter the water flow passage, so that the water in the heat preservation water tank can be circularly heated, thus increasing water temperature in the heat preservation water tank.

Published Chinese patent applications CN102445027A, CN101424451A and CN107687707A each also disclose a hot water system having a heat pump main machine and two water tanks. Published document EP2713112A2 discloses a hot water system having a heat pump main machine and two water tanks, in combination with a solar collector. Published document US9163855B2 discloses a hot water system having an induction device for heating water.

In the above existing water heater, after replenishing water, it will take a period of time to heat the water in the heat preservation water tank to a required water temperature by means of circularly heating. However, the shortcoming of this kind of water heater is that the water temperature in the heat preservation water tank cannot satisfy user's requirements on use in the heating process, thus affecting the normal use by the user.

Accordingly, there is a need in the art for a new hot water unit to solve the above problem.

### SUMMARY OF THE INVENTION

In order to solve the above problem in the prior art, that is, to solve the problem in the above existing circularly heating water heater that the water temperature in the heat preservation water tank cannot satisfy user's requirements on use in the process of heating the water in the heat preservation water tank to a temperature set by the user after replenishing water, which affects the normal use by the user, the present disclosure provides a hot water unit. The hot water unit includes a main heating machine, a pressure-bearing water tank, a heat preservation water tank and a water mixing valve; a water inlet of the pressure-bearing water tank is configured to receive tap water, and a drain port of the heat preservation water tank is configured to supply domestic water; a water outlet of the pressure-bearing water tank is connected to a first inlet of the water mixing valve, a water outlet of the heat preservation water tank is connected to a second inlet of the water mixing valve, and an outlet of the water mixing valve is connected to a water inlet of the main heating machine; and a water outlet of the main heating machine is connected to a water return port of the pressure-bearing water tank and a water return port of the heat preservation water tank.

As a preferred technical solution of the above hot water unit provided by the present disclosure, the main heating machine is a heat pump main machine, and the heat pump main machine includes a water heating cavity and a first heat exchanger configured to heat water in the water heating cavity; the first heat exchanger is connected to an electronic expansion valve, a compressor and a second heat exchanger through a refrigerant pipeline to form a refrigerant circulation loop; the water outlet and the water inlet of the main heating machine communicate with the water heating cavity.

As a preferred technical solution of the above hot water unit provided by the present disclosure, the valve member is three-way valve, and the water outlet of the main heating machine is connected to the water return port of the pressure-bearing water tank and the water return port of the heat preservation water tank through the three-way valve.

As a preferred technical solution of the above hot water unit provided by the present disclosure, the hot water unit further includes at least one of a water level detector, a first temperature sensor, a second temperature sensor, a third temperature sensor, a first on-off a valve, a second on-off valve, a third on-off valve, a first water pump and a second water pump; the water level detector is arranged in the heat preservation water tank; the first temperature sensor is arranged in the heat preservation water tank; the second temperature sensor is arranged on a water inlet side of the main heating machine; the third temperature sensor is arranged on a water outlet side of the main heating machine; the first on-off valve is arranged between the water outlet of the pressure-bearing water tank and the water mixing valve; the second on-off valve is arranged between the three-way valve and the water return port of the heat preservation water tank; and
the third on-off valve is arranged on a water inlet side of the pressure-bearing water tank; the first water pump is arranged between the main heating machine and the water mixing valve; and the second water pump is arranged on a drain port side of the heat preservation water tank.

As a preferred technical solution of the above hot water unit provided by the present disclosure, the hot water unit further includes a controller; a signal input end of the controller is communicatively connected to at least one of the water level detector, the first temperature sensor, the second temperature sensor and the third temperature sensor; and a signal output end of the controller is communicatively connected to at least one of the water mixing valve, the three-way valve, the first on-off valve, the second on-off valve, the third on-off valve, the first water pump and the second water pump.

As a preferred technical solution of the above hot water unit provided by the present disclosure, the first on-off valve, the second on-off valve and the third on-off valve are solenoid valves or electric valves.

As a preferred technical solution of the above hot water unit provided by the present disclosure, a first water purification device is connected to a water inlet side of the pressure-bearing water tank; and/or a second water purification device is connected between the water inlet of the main heating machine and the water mixing valve.

As a preferred technical solution of the above hot water unit provided by the present disclosure, the first water purification device and the second water purification device are electronic descaling instruments or filters.

As a preferred technical solution of the above hot water unit provided by the present disclosure, the hot water unit further includes at least one of a first check valve, a second check valve and a third check valve; the first check valve is arranged on a water inlet side of the pressure-bearing water tank to prevent water in the pressure-bearing water tank from flowing back outward; the second check valve is arranged between the water outlet of the pressure-bearing water tank and the water mixing valve to prevent water from flowing back to the pressure-bearing water tank; and the third check valve is arranged on a drain port side of the domestic hot water tank to prevent water from flowing back to the heat preservation water tank.

As a preferred technical solution of the above hot water unit provided by the present disclosure, the water outlet of the pressure-bearing water tank is arranged at a lower part of the pressure-bearing water tank; and/or the water outlet and/or the drain port of the heat preservation water tank are arranged at a lower part of the heat preservation water tank; and/or the heat preservation water tank is further provided with a water inlet for connecting with a domestic return water pipe.

In the hot water unit provided by the present disclosure, in the water heating process, a flow rate ratio of the hot water entering the main heating machine from the pressure-bearing water tank and the hot water entering the main heating machine from the heat preservation water tank is adjusted by the water mixing valve, so that the adjusted water, after one-time heating by the main heating machine, directly enters the heat preservation water tank to always ensure that the user's requirements on use are satisfied; at the same time, in the dynamic adjustment process of the water mixing valve, the water that does not meet the temperature requirements flowing out of the water outlet of the main heating machine can flow back to the pressure-bearing water tank through the valve member connected to the water outlet of the main heating machine, which prevents the water that does not meet the temperature requirements from flowing into the heat preservation water tank.

In addition, in the hot water unit provided by the present disclosure, if the main heating machine is a heat pump main machine, then in the process of defrosting the second heat exchanger connected to the heat pump main machine by a refrigerant circulation pipeline, the water outlet of the heat pump main machine and the water return port of the pressure-bearing water tank can be conducted by adjusting the three-way valve, and the water inlet of the heat pump main machine and the water outlet of the pressure-bearing water tank can be conducted through the water mixing valve, so that water circulation is formed between heat pump main machine and the pressure-bearing water tank. In this way, a larger amount of water exchanges heat with the first heat exchanger, which is advantageous for improving a heat absorption effect of the first heat exchanger, thereby improving a defrosting effect of an outdoor heat exchanger.

### BRIEF DESCRIPTION OF THE DRAWINGS

The hot water unit of the present disclosure and a control method therefor will be described below with reference to accompanying drawings. In the drawings:
FIG. 1 is a schematic structural view of the hot water unit of the present embodiment; and
FIG. 2 is a schematic flowchart of a control method for the hot water unit of the present embodiment.

### List of reference signs:

1: main heating machine; 11: second temperature sensor; 12: third temperature sensor; 2: pressure-bearing water tank; 21: third on-off valve; 22: first water purification device; 23: first check valve; 3: heat preservation water tank; 31: water level detector; 32: first temperature sensor; 33: second water pump; 34: third check valve; 4: domestic return water pipe; 5: second on-off valve; 6: first on-off valve; 7: second check valve; 8: three-way valve; 9: water mixing valve; 91: first water pump; 92: second water purification device.

### DETAILED DESCRIPTION OF THE EMBODIMENT(S) OF THE INVENTION

Preferred embodiments of the present disclosure will be described below with reference to the accompanying drawings. It should be understood by those skilled in the art that these embodiments are only used to explain the technical principles of the present disclosure, and are not intended to limit the scope of protection of the present disclosure. For example, although the present embodiment is described by taking a heat pump type hot water unit as an example, those skilled in the art can apply the present disclosure to other types of hot water units without departing from the principle of the present disclosure, such as electric heating type hot water unit, solar type hot water unit, etc.

It should be noted that in the description of the present disclosure, terms indicating directional or positional relationships, such as "center", "upper", "lower", "left", "right", "vertical", "horizontal", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first", "second" and "third" are only used for descriptive purposes, and should not be interpreted as indicating or implying relative importance.

In addition, it should also be noted that in the description of the present disclosure, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

In order to solve the problem in the above existing water heater that the water temperature in the heat preservation water tank cannot satisfy user's requirements on use in the process of heating the water in the heat preservation water tank to a temperature set by the user after replenishing water, which affects the normal use by the user, the present disclosure provides a hot water unit and a control method therefor.

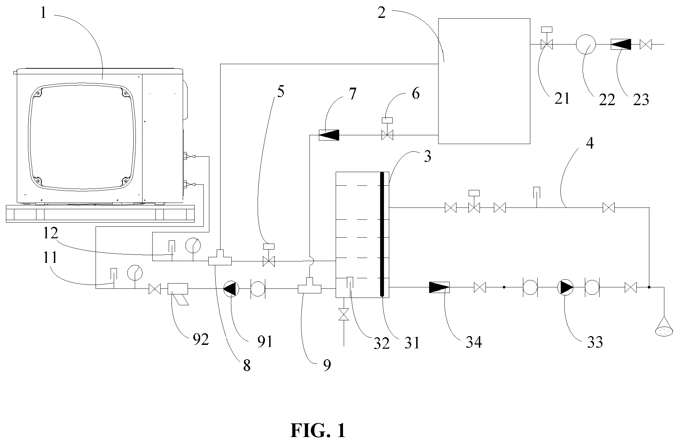

First, the hot water unit provided by the present embodiment is shown in FIG. 1. The hot water unit includes a main heating machine 1, a pressure-bearing water tank 2, a heat preservation water tank 3 and a water mixing valve 9; a water inlet of the pressure-bearing water tank 2 (an end of the pressure-bearing water tank 2 that is connected with a third on-off valve 21 in FIG. 1) is configured to receive tap water, and a drain port of the heat preservation water tank 3 (an end of the heat preservation water tank 3 that is connected with a third check valve 34 in FIG. 1) is configured to supply domestic water; a water outlet of the pressure-bearing water tank 2 is connected to a first inlet of the water mixing valve 9, a water outlet of the heat preservation water tank 3 is connected to a second inlet of the water mixing valve 9, and an outlet of the water mixing valve 9 is connected to a water inlet of the main heating machine 1; a water outlet of the main heating machine 1 is connected to a water return port of the pressure-bearing water tank 2 and a water return port of the heat preservation water tank 3 through a valve member (such as a three-way valve 8 in FIG. 1).

Exemplarily, in FIG. 1 of the present embodiment, an example is illustrated in which the valve member of the water outlet of the main heating machine 1 is the three-way valve 8, and the water outlet of the main heating machine 1 is connected to the water return port of the pressure-bearing water tank 2 and the water return port of the heat preservation water tank 3 through the three-way valve 8. The three-way valve 8 is mainly configured to selectively supply the water discharged from the water outlet of the main heating machine 1 to the pressure-bearing water tank 2 or the heat preservation water tank 3 according to different situations; as another implementation of the above valve member configured to achieve this purpose, the valve member may include a fourth on-off valve (not shown in the figure) and a fifth on-off valve (not shown in the figure); specifically, the fourth on-off valve is arranged between the water outlet of the main heating machine 1 and the water return port of the pressure-bearing water tank 2, and the fifth on-off valve is arranged between the water outlet of the main heating machine 1 and the water return port of the heat preservation water tank 3.

In the present embodiment, in addition to selectively supplying the water discharged from the water outlet of the pressure-bearing water tank 2 and the water outlet of the heat preservation water tank 3 to the water inlet of the main heating machine 1, the water mixing valve 9 also needs to play the role of mixing the water from the pressure-bearing water tank 2 and the water from the heat preservation water tank 3 to a required temperature. At present, the water mixing valve 9 includes a manual mechanical adjustment type and an electric temperature control valve. At the same time, due to change of an internal waterflow section of the water mixing valve 9 during the adjustment process, it can also play a role of adjusting the flow rate. Therefore, the water mixing valve 9 can also only allow the water from the pressure-bearing water tank 2 to pass through and adjust its flow rate, and can also only allow the water from the heat preservation water tank 3 to pass through and adjust its flow rate. The specific structure of the water mixing valve 9 belongs to the prior art, so the specific structure of the water mixing valve 9 will not be described herein. However, those skilled in the art can refer to electric temperature control valves disclosed in Chinese patent publication Nos. CN105626903A, CN205780896U, CN208651635U, etc., and the existing water mixing valves 9 on the market in the process of implementing the hot water unit of the present disclosure, and select and use the water mixing valve according to actual needs.

In the above hot water unit provided according to the present invention, in the water heating process, the flow rate ratio of the hot water entering the main heating machine 1 from the pressure-bearing water tank 2 and the hot water entering the main heating machine 1 from the heat preservation water tank 3 is adjusted by the water mixing valve 9, so that the adjusted water, after one-time heating by the main heating machine 1, directly enters the heat preservation water tank 3 to always ensure that the user's requirements on use are satisfied; at the same time, in the dynamic adjustment process of the water mixing valve 9, the water that does not meet the temperature requirements flowing out of the water outlet of the main heating machine can flow back to the pressure-bearing water tank 2 through the valve member connected to the water outlet of the main heating machine 1, which prevents the water that does not meet the temperature requirements from flowing into the heat preservation water tank 3.

The main heating machine 1 in the present embodiment can be selected as a heat pump main machine, and the heat pump main machine includes a water heating cavity and a first heat exchanger configured to heat the water in the water heating cavity; the first heat exchanger is connected to an electronic expansion valve, a compressor and a second heat exchanger through a refrigerant pipeline to form a refrigerant circulation loop; the water outlet and the water inlet of the main heating machine 1 communicate with the water heating cavity. It can be understood that the water heating cavity of the heat pump main machine can be formed in a coil having a certain length, so that the water flow path which obtains the heating effect can be extended. The first heat exchanger can be arranged as a coil type parallel to an extension path of the water heating cavity. Therefore, there is enough time to heat the flowing water, and when the water heating cavity is formed in the coil, a contact area between a unit volume of water and the first heat exchanger is larger, which is more advantageous for the heat exchange between the first heat exchanger and the water flow.

When heating the water, the first heat exchanger is used as a condenser and the second heat exchanger is used as an evaporator; and when heating the water in an external environment with extremely low temperature, a surface of the second heat exchanger will be frosted, thus reducing a water heating effect. When defrosting, it is necessary to use the first heat exchanger as an evaporator and use the second heat exchanger as a condenser, so as to use the heat released by the second heat exchanger for defrosting.

In the above hot water unit provided by the present embodiment, if the main heating machine 1 is a heat pump main machine, then in the process of defrosting the outdoor second heat exchanger connected with the heat pump main machine through the refrigerant circulation pipeline, a water circulation can be formed between the heat pump main machine and the pressure-bearing water tank 2 by conducting the water outlet of the heat pump main machine with the water return port of the pressure-bearing water tank 2 by adjusting the three-way valve 8, and conducting the water inlet of the heat pump main machine with the water outlet of the pressure-bearing water tank 2 through the water mixing valve 9. In this way, a larger amount of water exchanges heat with the first heat exchanger, which is advantageous for improving a heat absorption effect of the first heat exchanger, thereby improving a defrosting effect of the second heat exchanger.

As a preferred implementation of the above hot water unit provided by the present embodiment, the hot water unit further includes at least one of a water level detector 31, a first temperature sensor 32, a second temperature sensor 11, a third temperature sensor 12, a first on-off valve 6, a second on-off valve 5, a third on-off valve 21, a first water pump 91 and a second water pump 33; the water level detector 31 is arranged in the heat preservation water tank 3 and is configured to detect a water level of the heat preservation water tank 3; the first temperature sensor 32 is arranged in the heat preservation water tank 3 and is configured to detect a water temperature in the heat preservation water tank 3; the second temperature sensor 11 is arranged on a water inlet side of the main heating machine 1; the third temperature sensor 12 is arranged on a water outlet side of the main heating machine 1; the first on-off valve 6 is arranged between the water outlet of the pressure-bearing water tank 2 and the water mixing valve 9; the second on-off valve 5 is arranged between the three-way valve 8 and the water return port of the heat preservation water tank 3; the third on-off valve 21 is arranged on a water inlet side of the pressure-bearing water tank 2; the first water pump 91 is arranged between the main heating machine 1 and the water mixing valve 9, and can provide power for the water in the pressure-bearing water tank 2 and the heat preservation water tank 3 to enter the main heating machine 1 when the water is required to be heated; and the second water pump 33 is arranged on a drain port side of the heat preservation water tank 3 to provide power for domestic water. The first on-off valve 6, the second on-off valve 5 and the third on-off valve 21 in the present embodiment can be selected as solenoid valves and electric valves, so as to facilitate an automatic control of the hot water unit.

As a preferred implementation of the above hot water unit provided by the present embodiment, the hot water unit further includes a controller; a signal input end of controller is communicatively connected to at least one of the water level detector 31, the first temperature sensor 32, the second temperature sensor 11 and the third temperature sensor 12; and a signal output end of the controller is communicatively connected to at least one of the water mixing valve 9, the three-way valve 8, the first on-off valve 6, the second on-off valve 5, the third on-off valve 21, the first water pump 91 and the second water pump 33.

Exemplarily, after the user uses the hot water in the heat preservation water tank 3, the water level detector 31 can detect that the water level of the heat preservation water tank 3 drops, and then the main heating machine 1 is started immediately. The flow rate ratio of the hot water entering the main heating machine 1 from the pressure-bearing water tank 2 and the hot water entering the main heating machine 1 from the heat preservation water tank 3 is adjusted by the water mixing valve 9; at the same time, according to the water temperature on the water inlet side of the main heating machine 1 detected by the second temperature sensor 11, or according to the water temperature on the water outlet side of the main heating machine 1 detected by the third temperature sensor 12, the adjusted water enters the heat preservation water tank 3 after one-time heating by the main heating machine 1, which can always ensure that the user's requirements on use are satisfied.

In addition, if the water level in the heat preservation water tank 3 does not drop but the water temperature in the heat preservation water tank 3 is lowered below a water temperature range required by the user, then the three-way valve 8 immediately communicates the water outlet of the main heating machine 1 with the water return port of the heat preservation water tank 3, and the water mixing valve 9 communicates the water inlet of the main heating machine 1 with the water outlet of the heat preservation water tank 3; at the same time, the main heating machine 1 is started, and the water temperature in the heat preservation water tank 3 is increased by means of circularly heating.

In order to ensure the cleanness and sanitation of domestic water, a first water purification device 22 can be connected to the water inlet side of the pressure-bearing water tank 2; moreover, a second water purification device 92 can also be connected between the water inlet of the main heating machine 1 and the water mixing valve 9 in order to prevent too much scales from being accumulated in the heat preservation water tank 3, the main heating machine 1 and water flow pipelines. The first water purification device 22 and the second water purification device 92 are electronic descaling instruments or filters, in which the first water purification device 22 may preferably be a filter, and the second water purification device 92 may preferably be an electronic descaling instrument.

Further, in order to prevent the water from flowing back to affect the normal use of the hot water unit due to reasons such as abnormal water pressure, the hot water unit is further provided with at least one of a first check valve 23, a second check valve 7 and a third check valve 34; the first check valve 23 is arranged on the water inlet side of the pressure-bearing water tank 2 to prevent the water in the pressure-bearing water tank 2 from flowing back outward; the second check valve 7 is arranged between the water outlet of the pressure-bearing water tank 2 and the water mixing valve 9 to prevent the water from flowing back to the pressure-bearing water tank 2; and the third check valve 34 is arranged on a drain port side of a domestic hot water tank to prevent the water from flowing back to the heat preservation water tank 3.

As a preferred implementation of the above hot water unit provided by the present embodiment, the water pressure at a lower part of the pressure-bearing water tank 2 is larger, and the water outlet of the pressure-bearing water tank 2 can be arranged at the lower part of the pressure-bearing water tank 2, so as to facilitate the discharge of the water in the pressure-bearing water tank 2; similarly, the water outlet and/or the drain port of the heat preservation water tank 3 can also be arranged at the lower part of the heat preservation water tank 3. In addition, when the hot water of the hot water unit is used to be supplied to an apparatus that needs to use hot water repeatedly and circularly such as a heating installation, the heat preservation water tank 3 is further provided with a water inlet for connecting with a domestic return water pipe 4.

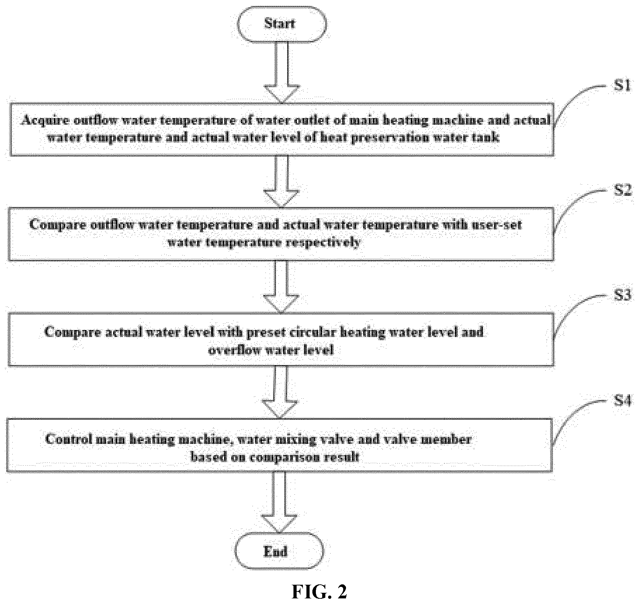

Then, the present embodiment also provides a control method for a hot water unit. As shown in FIG. 1, this hot water unit includes a main heating machine 1, a pressure-bearing water tank 2, a heat preservation water tank 3 and a water mixing valve 9; the water inlet of the pressure-bearing water tank 2 is configured to receive tap water, and the drain port of the heat preservation water tank 3 is configured to supply domestic water; the water outlet of the pressure-bearing water tank 2 is connected to the first inlet of the water mixing valve 9, the water outlet of the heat preservation water tank 3 is connected to the second inlet of the water mixing valve 9, and the outlet of the water mixing valve 9 is connected to the water inlet of the main heating machine 1; the water outlet of the main heating machine 1 is connected to the water return port of the pressure-bearing water tank 2 and the water return port of the heat preservation water tank 3 through a valve member. As shown in FIG. 2, the control method includes:
S1: acquiring an outflow water temperature of the water outlet of the main heating machine 1 and an actual water temperature and actual water level of the heat preservation water tank 3;
S2: comparing the outflow water temperature and the actual water temperature with a user-set water temperature respectively;
S3: comparing the actual water level with a preset circular heating water level and an overflow water level; and
S4: controlling the main heating machine 1, the water mixing valve 9 and the valve member based on a comparison result.

According to the control method for the hot water unit of the present embodiment, the outflow water temperature of the water outlet of the main heating machine 1 and the actual water temperature of the heat preservation water tank 3 are compared with the user-set water temperature respectively, the actual water level of the heat preservation water tank 3 is compared with the preset circular heating water level and the overflow water level, and then the main heating machine 1, the water mixing valve 9 and the valve member are controlled based on a comparison result, so that an automatic control of the hot water unit can be realized according to the acquired specific information; moreover, it is ensured that when the actual water level of the heat preservation water tank 3 is higher than the circular heating water level and lower than the overflow water level, and a difference between the actual water temperature and the user-set water temperature is smaller than or equal to a preset allowable temperature difference, the water mixing valve 9 can be used to adjust the flow rate ratio of the water entering the main heating machine 1 from the pressure-bearing water tank 2 and the water entering the main heating machine 1 from the heat preservation water tank 3, so that the adjusted water directly enters the heat preservation water tank 3 after one-time heating by the main heating machine 1, which can always ensure that the user's requirements on use are satisfied.

The present embodiment is described by taking the three-way valve 8 in FIG. 1 as the valve member; the outflow water temperature of the water outlet of the main heating machine 1 can be monitored in real time by the third temperature sensor 12, the actual water temperature of the heat preservation water tank 3 can be monitored in real time by the first temperature sensor 32, and the actual water level of the heat preservation water tank 3 can be monitored in real time by the water level detector 31.

It should be noted that although the specific steps of the control method for the hot water unit of the present disclosure have been described above in detail, those skilled in the art can combine, split the above steps and exchange the order thereof without departing from the basic principle of the present disclosure. The thus-modified technical solutions do not change the basic idea of the present disclosure, and therefore also fall within the scope of protection of the present disclosure. For example, step S2 and step S3 may be executed simultaneously, or may be executed sequentially in any order.

As a preferred implementation of the above control method provided by the present embodiment, in step S4, the step of controlling the main heating machine 1, the water mixing valve 9 and the valve member based on the comparison result includes: if the actual water level is higher than the circular heating water level and lower than the overflow water level, and the difference between the actual water temperature and the user-set water temperature is smaller than or equal to the preset allowable temperature difference, then starting the main heating machine 1 for heating, controlling the water mixing valve 9 to adjust the outflow water temperature to the user-set water temperature according to the comparison result of the outflow water temperature and the user-set water temperature, and at the same time, controlling the valve member to selectively conduct the water outlet of the main heating machine 1 with the water return port of the pressure-bearing water tank 2 or the water return port of the heat preservation water tank 3 according to the comparison result of the outflow water temperature and the user-set water temperature.

It will be understood by those skilled in the art that when adjusting the outflow water temperature to the user-set water temperature, specifically, the control program can actually be set to adjust the outflow water temperature to a certain range determined based on the user-set water temperature. For example, if the user-set water temperature is 60°C, then the adjusted temperature may be set to 59°C~61°C. Such a setting can generally meet user's actual requirements in practice, and should still fall within the scope of protection of the present disclosure. The preset allowable temperature difference may be set according to conditions such as actual requirements and the accuracy of the temperature sensors. For example, the preset allowable temperature difference may be any value between 2°C and 3°C.

Specifically, the step of controlling the water mixing valve 9 to adjust the outflow water temperature to the user-set water temperature according to the comparison result of the outflow water temperature and the user-set water temperature includes: if the outflow water temperature is lower than the user-set water temperature, then decreasing the flow rate of the water outlet of the pressure-bearing water tank 2 and/or increasing the flow rate of the water outlet of the heat preservation water tank 3 through the water mixing valve 9, so as to increase the outflow water temperature to the user-set water temperature. In addition, if the outflow water temperature is higher than the user-set water temperature, the flow rate of the water outlet of the pressure-bearing water tank 2 is increased and/or the flow rate of the water outlet of the heat preservation water tank 3 is decreased through the water mixing valve 9, so as to reduce the outflow water temperature to the user-set water temperature.

At the same time, the step of controlling the valve member to selectively conduct the water outlet of the main heating machine 1 with the water return port of the pressure-bearing water tank 2 or the water return port of the heat preservation water tank 3 according to the comparison result of the outflow water temperature and the user-set water temperature includes: if the outflow water temperature is lower than the user-set water temperature, then conducting the water outlet of the main heating machine 1 with the water return port of the pressure-bearing water tank 2 through the valve member; and/or if the outflow water temperature is higher than or equal to the user-set water temperature, then conducting the water outlet of the main heating machine 1 with the water return port of the heat preservation water tank 3 through the valve member.

In the control method for the hot water unit according to the present disclosure, in the dynamic adjustment process of the water mixing valve 9, if the outflow water temperature is lower than the user-set water temperature, the valve member conducts the water outlet of the main heating machine 1 with the water return port of the pressure-bearing water tank 2, so that the water that does not meet the requirement of the user-set water temperature flowing out of the water outlet of the main heating machine flows back to the pressure-bearing water tank 2, thereby preventing the water that does not meet the temperature requirement from flowing into the heat preservation water tank 3. Therefore, it is further ensured that the water temperature of the heat preservation water tank 3 can always meet the user's requirements on use when replenishing water, so as to improve the user's experience in use.

As a preferred implementation of the above control method provided by the present embodiment, in step S4, the step of controlling the main heating machine 1, the water mixing valve 9 and the valve member based on the comparison result includes: if the actual water level is lower than the circular heating water level, then starting the main heating machine 1 for heating, controlling the water mixing valve 9 to only allow conduction of the water outlet of the pressure-bearing water tank 2 with the water inlet of the main heating machine 1, and controlling the valve member to only allow conduction of the water outlet of the main heating machine 1 with the water return port of the heat preservation water tank 3.

When the actual water level in the heat preservation water tank 3 is lower than the circular heating water level, then the amount of hot water in the heat preservation water tank 3 is lower. In order to give considerations to both water replenishing efficiency and water heating efficiency, the above method can be used to enable the water in the pressure-bearing water tank 2 to directly enter the heat preservation water tank 3 after one-time heating by the main heating machine 1. If the requirement of the user-set water temperature is not met after the one-time heating, the following circular heating method can be used to circularly heat the water in the heat preservation water tank 3 to the user-set water temperature through the main heating machine 1. At the same time, when the hot water in the heat preservation water tank 3 is naturally cooled to be below the user-set water temperature, the method of circular heating can also be used.

As a preferred implementation of the above control method provided by the present embodiment, in step S4, the step of controlling the main heating machine 1, the water mixing valve 9 and the valve member based on the comparison result includes: if the actual water level is higher than the circular heating water level, and the difference between the actual water temperature and the user-set water temperature is larger than the preset allowable temperature difference, then starting the main heating machine 1 for heating, controlling the water mixing valve 9 to only allow conduction of the water outlet of the heat preservation water tank 3 with the water inlet of the main heating machine 1, and controlling the valve member to only allow conduction of the water outlet of the main heating machine 1 with the water return port of the heat preservation water tank 3. That is, the hot water in the heat preservation water tank 3 is heated to the user-set water temperature by means of circularly heating.

As a preferred implementation of the above control method provided by the present embodiment, the main heating machine 1 is a heat pump main machine, and before the step of controlling the main heating machine 1, the water mixing valve 9 and the valve member based on the comparison result in step S4, the method further includes: acquiring an inflow water temperature of the water inlet of the main heating machine 1; calculating an actual temperature difference between the outflow water temperature and the inflow water temperature; comparing the actual temperature difference with a preset first temperature difference; and if the actual temperature difference is smaller than the first temperature difference, then controlling the heat pump main machine to enter a defrosting mode, controlling the valve member to only allow conduction of the water outlet of the main heating machine 1 with the water return port of the pressure-bearing water tank 2, and controlling the water mixing valve 9 to conduct the water outlet of the pressure-bearing water tank 2 with the water inlet of the main heating machine 1.

Exemplarily, the inflow water temperature of the water inlet of the main heating machine 1 can be monitored in real time by the second temperature sensor 11. The first temperature difference can be used to measure the heating effect of the main heating machine 1. When the actual temperature difference between the outflow water temperature and the inflow water temperature is smaller than the first temperature difference, it means that the heating effect of the main heating machine 1 is low, and the water in the heat preservation water tank 3 cannot be heated normally; whereas in winter, when the main heating machine 1 is a heat pump main machine, this situation is often caused by frosting on the outdoor second heat exchanger connected with the heat pump main machine. At this time, the heat pump main machine is controlled to enter the defrosting mode, that is, the first heat exchanger is used as an evaporator and the second heat exchanger is used as a condenser, so as to use the heat released by the second heat exchanger to defrost. At the same time, the valve member is controlled to only allow conduction of the water outlet of the main heating machine 1 with the water return port of the pressure-bearing water tank 2, and the water mixing valve 9 is controlled to conduct the water outlet of the pressure-bearing water tank 2 with the water inlet of the main heating machine 1, so that a water circulation is formed between the main heating machine 1 and the pressure-bearing water tank 2. In this way, a larger amount of water exchanges heat with the first heat exchanger, which is advantageous for improving a heat absorption effect of the first heat exchanger, thereby improving a defrosting effect of the outdoor heat exchanger.

As a preferred implementation of the above control method provided by the present embodiment, after the heat pump main machine is controlled to enter the defrosting mode, when the water mixing valve 9 is controlled to conduct the water outlet of the pressure-bearing water tank 2 with the water inlet of the main heating machine 1, the control method further includes: comparing the actual temperature difference with a preset second temperature difference; and if the actual temperature difference is smaller than the second temperature difference, then decreasing the flow rate of the water outlet of the pressure-bearing water tank 2 and/or increasing the flow rate of the water outlet of the heat preservation water tank 3 through the water mixing valve 9, so that the actual temperature difference is larger than or equal to the second temperature difference.

Exemplarily, in special cases, when the main heating machine 1 is defrosting, the water temperature of the water inlet of the main heating machine 1 is higher than the water temperature of the water outlet. The second temperature difference is used to measure the defrosting effect of the main heating machine 1, so when the actual temperature difference between the outflow water temperature and the inflow water temperature is smaller than the second temperature difference, it means that the defrosting effect of the main heating machine 1 is low, and the water temperature in the pressure-bearing water tank 2 cannot meet the normal defrosting requirements of the main heating machine 1. At this time, the water mixing valve 9 can control part of the hot water in the heat preservation water tank 3 to be mixed with the cold water in the pressure-bearing water tank 2 before flowing into the main heating machine 1, so as to improve the defrosting effect of the main heating machine 1.

As a preferred implementation of the above control method provided by the present embodiment, the first water pump 91 is provided between the water mixing valve 9 and the water inlet of the main heating machine 1, and the first water pump 91 can provide power for the water in the pressure-bearing water tank 2 or the water in the heat preservation water tank 3 to enter the main heating machine 1 when the water is required to be heated; therefore, the first water pump 91 can be started at the same time of controlling the water mixing valve 9 to conduct the water inlet of the main heating machine 1 with the water outlet of the pressure-bearing water tank 2 and/or the water outlet of the heat preservation water tank 3.

As a preferred implementation of the above control method provided by the present embodiment, the first on-off valve 6 is provided between the water outlet of the pressure-bearing water tank 2 and the water mixing valve 9, and the first on-off valve 6 is opened at the same time of controlling the water mixing valve 9 to conduct the water inlet of the main heating machine 1 with the water outlet of the pressure-bearing water tank 2; the second on-off valve 5 is connected to the water return port of the heat preservation water tank 3, and the second on-off valve 5 is opened at the same time of controlling the valve member to conduct the water outlet of the main heating machine 1 with the water return port of the heat preservation water tank 3. When the hot water unit of the present embodiment does not need to heat the hot water in the heat preservation water tank 3, the first on-off valve 6 and the second on-off valve 5 can be closed to block the flow of water in the hot water unit, thereby realizing a reliable control of the above hot water unit provided by the present embodiment.

Of course, the above alternative implementations, as well as the alternative implementations and preferred implementations, can also be used in cooperation with each other, so as to obtain new implementations suitable for more specific application scenes through combination.

It should be understood by those skilled in the art that the control method for the hot water unit provided by the present embodiment may be stored as a program in a computer-readable storage medium. The storage medium includes several instructions for causing a computer device (which may be a personal computer, a server, or a network device, etc.) or a processor to execute some steps of the methods of various embodiments of the present disclosure. The above storage medium includes: a U disk, a mobile hard disk, a read-only memory (ROM), a random access memory (RAM), a magnetic disk or an optical disk and other media that can store program codes.

Furthermore, it will be understood by those skilled in the art that although some of the embodiments herein include certain features included in other embodiments rather than others features, combinations of features of different embodiments are meant to be within the scope of protection of the present disclosure and to form different embodiments. For example, in the claims of the present disclosure, any of the claimed embodiments may be used in any combination.

Hitherto, the technical solutions of the present disclosure have been the in connection with the preferred embodiments shown in the accompanying drawings, but it is easily understood by those skilled in the art that the scope of protection of the present disclosure is obviously not limited to these specific embodiments, but defined by the claims.

## Claims

1. A hot water unit, comprising a main heating machine (1), a pressure-bearing water tank (2), a heat preservation water tank (3) and a water mixing valve (9); wherein a water inlet of the pressure-bearing water tank (2) is configured to receive tap water, and a drain port of the heat preservation water tank (2) is configured to supply domestic water; a water outlet of the pressure-bearing water tank (2) is connected to a first inlet of the water mixing valve (9), a water outlet of the heat preservation water tank (3) is connected to a second inlet of the water mixing valve (9), and an outlet of the water mixing valve (9) is connected to a water inlet of the main heating machine (1); and a water outlet of the main heating machine (1) is connected to a water return port of the pressure-bearing water tank (2) and a water return port of the heat preservation water tank (3) through a valve member,
**characterized in that** the water mixing valve (9) is configured to adjust a flow rate ratios of a hot water entering the main heating machine (1) from the pressure-bearing water tank (2) and a hot water entering the main heating machine (1) from the heat preservation water tank (3), and that the water mixing valve (9) is configured to adjust a water which does not meet temperature requirements flowing out of the water outlet of the main heating machine (1) to flow back to the pressure-bearing water tank (2) through a valve member connected to the water outlet of the main heating machine (1).

2. The hot water unit according to claim 1, wherein the main heating machine (1) is a heat pump main machine, and the heat pump main machine comprises a water heating cavity and a first heat exchanger configured to heat water in the water heating cavity;
the first heat exchanger is connected to an electronic expansion valve, a compressor and a second heat exchanger through a refrigerant pipeline to form a refrigerant circulation loop; and
the water outlet and the water inlet of the main heating machine (1) communicate with the water heating cavity.

3. The hot water unit according to claim 2, wherein the valve member is three-way valve (8), and the water outlet of the main heating machine (1) is connected to the water return port of the pressure-bearing water tank (2) and the water return port of the heat preservation water tank (3) through the three-way valve (8),
wherein in a process of defrosting the second heat exchanger, a water circulation is able to be formed between the heat pump main machine and the pressure-bearing water tank (2) by conducting the water outlet of the heat pump main machine with the water return port of the pressure-bearing water tank (2) by adjusting the three-way valve (8), and conducting the water inlet of the heat pump main machine with the water outlet of the pressure-bearing water tank (2) through the water mixing valve (9).

4. The hot water unit according to claim 3, further comprising at least one of a water level detector (31), a first temperature sensor (32), a second temperature sensor (11), a third temperature sensor (12), a first on-off valve (6), a second on-off valve (5), a third on-off valve (21), a first water pump (91) and a second water pump (33);
Wherein the water level detector (31) is arranged in the heat preservation water tank (3);
the first temperature sensor (32) is arranged in the heat preservation water tank (3);
the second temperature sensor (11) is arranged on a water inlet side of the main heating machine (1);
the third temperature sensor (12) is arranged on a water outlet side of the main heating machine (1);
the first on-off valve (6) is arranged between the water outlet of the pressure-bearing water tank (2) and the water mixing valve (9);
the second on-off valve (5) is arranged between the three-way valve (8) and the water return port of the heat preservation water tank (3);
the third on-off valve (21) is arranged on a water inlet side of the pressure-bearing water tank (2);
the first water pump (91) is arranged between the main heating machine (1) and the water mixing valve (9); and
the second water pump (33) is arranged on a drain port side of the heat preservation water tank (3).

5. The hot water unit according to claim 4, further comprising a controller;
wherein a signal input end of the controller is communicatively connected to at least one of the water level detector (31), the first temperature sensor (32), the second temperature sensor (11) and the third temperature sensor (12); and
a signal output end of the controller is communicatively connected to at least one of the water mixing valve (9), the three-way valve (8), the first on-off valve (6), the second on-off valve (5), the third on-off valve (21), the first water pump (91) and the second water pump (33).

6. The hot water unit according to claim 4, wherein the first on-off valve (6), the second on-off valve (5) and the third on-off valve (21) are solenoid valves or electric valves.

7. The hot water unit according to claim 1, wherein a first water purification device (22) is connected to a water inlet side of the pressure-bearing water tank (2); and/or
a second water purification device (92) is connected between the water inlet of the main heating machine (1) and the water mixing valve (9).

8. The hot water unit according to claim 7, wherein the first water purification device (22) and the second water purification device (92) are electronic descaling instruments or filters.

9. The hot water unit according to claim 1, further comprising at least one of a first check valve (23), a second check valve (7) and a third check valve (34);
wherein the first check valve (23) is arranged on a water inlet side of the pressure-bearing water tank (2) to prevent water in the pressure-bearing water tank (2) from flowing back outward;
the second check valve (7) is arranged between the water outlet of the pressure-bearing water tank (2) and the water mixing valve (9) to prevent water from flowing back to the pressure-bearing water tank (2); and
the third check valve (34) is arranged on a drain port side of the domestic hot water tank to prevent water from flowing back to the heat preservation water tank (3).

10. The hot water unit according to claim 1, wherein the water outlet of the pressure-bearing water tank (2) is arranged at a lower part of the pressure-bearing water tank (2); and/or
the water outlet and/or the drain port of the heat preservation water tank (3) are arranged at a lower part of the heat preservation water tank (3); and/or the heat preservation water tank (3) is further provided with a water inlet for connecting with a domestic return water pipe (4).

## Patentansprüche

1. Eine Warmwasseranlage, bestehend aus einer Hauptheizmaschine (1), einem drucktragenden Wasserspeicher (2), einem Wärmerückgewinnungsspeicher (3) und einem Wasserzumischventil (9); wobei ein Wasserzulauf des drucktragenden Wasserspeichers (2) zum Empfang von Brauchwasser ausgelegt ist und ein Ablauf des Wärmerückgewinnungsspeichers (2) zum Versorgung mit Haushaltswasser ausgelegt ist; ein Wasserauslauf des drucktragenden Wasserspeichers (2) ist mit einem ersten Zulauf des Wasserzumischventils (9) verbunden, ein Wasserauslauf des Wärmerückgewinnungsspeichers (3) ist mit einem zweiten Zulauf des Wasserzumischventils (9) verbunden, und ein Auslauf des Wasserzumischventils (9) ist mit einem Wasserzulauf der Hauptheizmaschine (1) verbunden; und ein Wasserauslauf der Hauptheizmaschine (1) ist durch ein Ventilmitglied mit einem Rücklaufport des drucktragenden Wasserspeichers (2) und einem Rücklaufport des Wärmerückgewinnungsspeichers (3) verbunden.
**dadurch gekennzeichnet, dass** die Wasser-Mischungsventil (9) so konfiguriert ist, dass es das Fließverhältnis von heißem Wasser anpasst, das aus dem Druckbehaltewassertank (2) in die Hauptheizmaschine (1) eintritt, und das Fließverhältnis von heißem Wasser anpasst, das aus dem Wärmespeicherwassertank (3) in die Hauptheizmaschine (1) eintritt, und dass das Wasser-Mischungsventil (9) so konfiguriert ist, dass es Wasser, das den Temperaturanforderungen nicht entspricht und aus dem Wasserablauf der Hauptheizmaschine (1) austritt, anpasst, um es über ein mit dem Wasserablauf der Hauptheizmaschine (1) verbundenes Ventilglied zurück in den Druckbehaltewassertank (2) fließen zu lassen.

2. Die Warmwasseranlage nach Anspruch 1, wobei die Hauptheizmaschine (1) eine Wärmepumpenhauptmaschine ist und die Wärmepumpenhauptmaschine einen Wassererwärmungskammern und einen ersten Wärmetauscher umfasst, der zum Erwärmen des Wassers in der Wassererwärmungskammer ausgelegt ist;
der erste Wärmetauscher ist über eine Kältemittelpipeline mit einem elektronischen Drosselventil, einem Kompressor und einem zweiten Wärmetauscher verbunden, um eine Kältemitterkreislaufschleife zu bilden; und
Der Wasseraustritt und der Wasserzulauf der Hauptheizmaschine (1) kommunizieren mit der Wärmekammer.

3. Die Heißwasseranlage nach Anspruch 2, **dadurch gekennzeichnet, dass** das Ventilglied ein Drehradventil (8) ist und der Wasserauslass der Hauptheizmaschine (1) über das Drehradventil (8) mit dem Rücklaufanschluss des drucktragenden Wasserspeichers (2) und dem Rücklaufanschluss des Wärmespeichers (3) verbunden ist.
wobei bei dem Vorgang der Außenseite der zweiten Wärmetauscher eine Wasserkreislauf zwischen der Wärmepumpenhauptmaschine und dem drucktragenden Wasserspeicher (2) durch das Anschließen des Wasserauslasses der Wärmepumpenhauptmaschine mit dem Wasserzurücklaufanschluss des drucktragenden Wasserspeichers (2) durch die Einstellung des Dreischaltventils (8) und das Anschließen des Wassereingangs der Wärmepumpenhauptmaschine mit dem Wasserauslass des drucktragenden Wasserspeichers (2) über das Wassermischventil (9) gebildet werden kann.

4. Die Heißwasseranlage nach Anspruch 3, **dadurch gekennzeichnet, dass** sie zumindest eines der folgenden Elemente umfasst: ein Wasserspiegel-Sensor (31), einen ersten Temperatursensor (32), einen zweiten Temperatursensor (11), einen dritten Temperatursensor (12), ein erstes Schließventil (6), ein zweites Schließventil (5), ein drittes Schließventil (21), eine erste Wasserpumpe (91) und eine zweite Wasserpumpe (33);
Dabei ist der Wasserspiegel-Detektor (31) im Wärmerückgewinnungswassertank (3) angeordnet;
der erste Temperatursensor (32) ist im Wärmeisolierungsbehälter (3) angeordnet;
Der zweite Temperatursensor (11) ist auf der Wassereingangsseite der Hauptheizmaschine (1) angeordnet;
der dritte Temperatursensor (12) ist auf der Wasserablaufseite der Hauptheizmaschine (1) angeordnet;
Das erste Ein/Aus-ventil (6) ist zwischen dem Wasserablauf des drucktragenden Wasserspeichers (2) und dem Wasserzumischventil (9) angeordnet;
die zweite An/Aus-Ventil (5) ist zwischen der Dreifachventil (8) und dem Rücklaufanschluss des Wärmespeicherbehälters (3) angeordnet;
Das dritte Ein/Aus-ventil (21) ist auf der Wasserzulaufseite des drucktragenden Wassertanks (2) angeordnet;
die erste Wasserpumpe (91) ist zwischen der Hauptheizmaschine (1) und dem Wasserzumischventil (9) angeordnet; und
Die zweite Wasserwelle (33) ist auf der Abflussseitenseite des Wärmerückhaltebeckens (3) angeordnet.

5. Die Warmwasseranlage nach Anspruch 4, **dadurch gekennzeichnet, dass** sie ein Steuergerät umfasst;
wobei ein Signal-Eingang des Steuergeräts kommunikativ mit mindestens einem der Wasserstandsdetektor (31), dem ersten Temperatursensor (32), dem zweiten Temperatursensor (11) und dem dritten Temperatursensor (12) verbunden ist; und
Ein Signalausgang des Controllers ist kommunikativ mit mindestens einem der Wasserzumischventile (9), dem Drehrückschlagventil (8), dem ersten Schaltventil (6), dem zweiten Schaltventil (5), dem dritten Schaltventil (21), der ersten Wasserpumpe (91) und der zweiten Wasserpumpe (33) verbunden.

6. Die Heißwasseranlage nach Anspruch 4, **dadurch gekennzeichnet, dass** das erste Schaltventil (6), das zweite Schaltventil (5) und das dritte Schaltventil (21) Solenoidventile oder elektrische Ventile sind.

7. Die Warmwasseranlage nach Anspruch 1, **dadurch gekennzeichnet, dass** eine erste Wasserreinigungsanlage (22) an der Wasserzulaufseite des drucktragenden Wasserspeichers (2) angeschlossen ist; und/oder
Eine zweite Wasseraufbereitungsanlage (92) ist zwischen dem Wassereingang der Hauptheizmaschine (1) und dem Wasser mischventil (9) angeschlossen.

8. Die Warmwasseranlage nach Anspruch 7, bei der das erste Wasseraufbereitungsgerät (22) und das zweite Wasseraufbereitungsgerät (92) elektronische Entkalkungsgeräte oder Filter sind.

9. Die Heißwasseranlage nach Anspruch 1, **dadurch gekennzeichnet, dass** sie mindestens eines von einer ersten Absperrklappe (23), einer zweiten Absperrklappe (7) und einer dritten Absperrklappe (34) umfasst;
wobei die erste Sicherheitsklappe (23) auf der Wasserzulaufseite des drucktragenden Wassertanks (2) angeordnet ist, um ein Rückfließen des Wassers aus dem drucktragenden Wassertank (2) nach außen zu verhindern;
die zweite Absperrklappe (7) ist zwischen dem Wasseranschluss des druckhaltenden Wasserspeichers (2) und dem Wasserzumischventil (9) angeordnet, um ein Rückfließen des Wassers in den druckhaltenden Wasserspeicher (2) zu verhindern; und
Die dritte Absperrklappe (34) ist auf der Entwässerungsseite des Warmwasserspeichers angeordnet, um das Zurückfließen von Wasser in den Wärmerückhaltespeicher (3) zu verhindern.

10. Die Warmwasseranlage nach Anspruch 1, bei der die Wasserauslassöffnung des drucktragenden Wasserspeichers (2) am unteren Teil des drucktragenden Wasserspeichers (2) angeordnet ist; und/oder
Der Wasserauslass und/oder der Abfluss des Wärmespeicherwasserbeckens (3) sind am unteren Teil des Wärmespeicherwasserbeckens (3) angeordnet; und/oder das Wärmespeicherwasserbecken (3) ist weiterhin mit einem Wasseranschluss ausgestattet, der mit einem Hauswasser Rücklaufrohr (4) verbunden wird.

## Revendications

1. Une unité d'eau chaude, comprenant une machine de chauffage principale (1), un réservoir d'eau sous pression (2), un réservoir d'eau isolé (3) et une vanne de mélange d'eau (9) ; dans laquelle une entrée d'eau du réservoir d'eau sous pression (2) est configurée pour recevoir de l'eau du robinet, et un port de drainage du réservoir d'eau isolé (2) est configuré pour fournir de l'eau domestique ; une sortie d'eau du réservoir d'eau sous pression (2) est connectée à une première entrée de la vanne de mélange d'eau (9), une sortie d'eau du réservoir d'eau isolé (3) est connectée à une deuxième entrée de la vanne de mélange d'eau (9), et une sortie de la vanne de mélange d'eau (9) est connectée à une entrée d'eau de la machine de chauffage principale (1) ; et une sortie d'eau de la machine de chauffage principale (1) est connectée à un port de retour d'eau du réservoir d'eau sous pression (2) et un port de retour d'eau du réservoir d'eau isolé (3) à travers un élément de vanne,
**caractérisé en ce que** la vanne de mélange d'eau (9) est configurée pour ajuster les rapports de débit d'eau chaude entrant dans la machine de chauffage principale (1) depuis le réservoir d'eau sous pression (2) et d'eau chaude entrant dans la machine de chauffage principale (1) depuis le réservoir d'eau de conservation thermique (3), et que la vanne de mélange d'eau (9) est configurée pour ajuster le flux d'eau ne répondant pas aux exigences de température sortant de la sortie d'eau de la machine de chauffage principale (1) afin qu'elle retourne au réservoir d'eau sous pression (2) à travers un élément de vanne connecté à la sortie d'eau de la machine de chauffage principale (1).

2. L'unité d'eau chaude selon la revendication 1, dans laquelle la machine de chauffage principale (1) est une machine principale de pompe à chaleur, et la machine principale de pompe à chaleur comprend une cavité de chauffage de l'eau et un premier échangeur de chaleur configuré pour chauffer l'eau dans la cavité de chauffage de l'eau ;
le premier échangeur de chaleur est connecté à une vanne d'expansion électronique, un compresseur et un deuxième échangeur de chaleur par une conduite de réfrigérant pour former une boucle de circulation de réfrigérant ; et
La sortie d'eau et l'entrée d'eau de la machine de chauffage principale (1) communiquent avec la cavité de chauffage de l'eau.

3. L'unité d'eau chaude selon la revendication 2, dans laquelle le membre de la valve est une valve à trois voies (8), et la sortie d'eau de la machine de chauffage principale (1) est connectée à la prise de retour d'eau du réservoir d'eau supportant la pression (2) et à la prise de retour d'eau du réservoir d'eau de conservation de chaleur (3) par la valve à trois voies (8).
où, lors du processus de dégivrage du deuxième échangeur de chaleur, une circulation d'eau peut être formée entre la machine principale de la pompe à chaleur et le réservoir d'eau sous pression (2) en connectant la sortie d'eau de la machine principale de la pompe à chaleur au port de retour d'eau du réservoir d'eau sous pression (2) en ajustant la vanne trois voies (8), et en connectant l'entrée d'eau de la machine principale de la pompe à chaleur à la sortie d'eau du réservoir d'eau sous pression (2) via la vanne de mélange d'eau (9).

4. L'unité d'eau chaude selon la revendication 3, comprenant en outre au moins l'un des détecteurs de niveau d'eau (31), du premier capteur de température (32), du deuxième capteur de température (11), du troisième capteur de température (12), de la première vanne d'arrêt (6), de la deuxième vanne d'arrêt (5), de la troisième vanne d'arrêt (21), de la première pompe à eau (91) et de la deuxième pompe à eau (33) ;
où le détecteur de niveau d'eau (31) est disposé dans le réservoir d'eau de conservation de chaleur (3) ;
le premier capteur de température (32) est disposé dans le réservoir d'eau de conservation de chaleur (3) ;
le deuxième capteur de température (11) est disposé sur le côté d'entrée d'eau de la machine de chauffage principale (1) ;
le troisième capteur de température (12) est disposé sur le côté de sortie d'eau de la machine de chauffage principale (1) ;
la première vanne on/off (6) est disposée entre la sortie d'eau du réservoir d'eau sous pression (2) et la vanne de mélange d'eau (9) ;
la deuxième vanne on/off (5) est disposée entre la vanne à trois voies (8) et le port de retour d'eau du réservoir d'isolation thermique (3) ;
la troisième vanne d'arrêt (21) est disposée sur le côté d'entrée d'eau du réservoir d'eau sous pression (2) ;
la première pompe à eau (91) est disposée entre la machine de chauffage principale (1) et la vanne de mélange d'eau (9) ; et
La deuxième pompe à eau (33) est disposée sur le côté du port d'évacuation du réservoir d'eau de conservation thermique (3).

5. L'unité d'eau chaude selon la revendication 4, comprenant en outre un contrôleur ;
où une extrémité d'entrée de signal du contrôleur est connectée de manière communicative à au moins l'un des détecteurs de niveau d'eau (31), du premier capteur de température (32), du deuxième capteur de température (11) et du troisième capteur de température (12) ; et
La sortie de signal du contrôleur est connectée de manière communicative à au moins l'une des valvules de mélange d'eau (9), la valve à trois voies (8), la première vanne d'arrêt (6), la deuxième vanne d'arrêt (5), la troisième vanne d'arrêt (21), la première pompe à eau (91) et la deuxième pompe à eau (33).

6. L'unité d'eau chaude selon la revendication 4, dans laquelle la première vanne à on/off (6), la deuxième vanne à on/off (5) et la troisième vanne à on/off (21) sont des électrovannes ou des vannes électriques.

7. L'unité d'eau chaude selon la revendication 1, dans laquelle un premier dispositif de purification de l'eau (22) est connecté au côté d'entrée d'eau du réservoir d'eau sous pression (2) ; et/ou
Un deuxième dispositif de purification d'eau (92) est connecté entre l'entrée d'eau de la machine de chauffage principale (1) et la vanne de mélange d'eau (9).

8. L'unité d'eau chaude selon la revendication 7, dans laquelle le premier dispositif de purification d'eau (22) et le deuxième dispositif de purification d'eau (92) sont des instruments électroniques de désincrustation ou des filtres.

9. L'unité d'eau chaude selon la revendication 1, comprenant en outre au moins l'une parmi une première vanne anti-retour (23), une deuxième vanne anti-retour (7) et une troisième vanne anti-retour (34) ;
où la première vanne anti-retour (23) est disposée sur le côté d'entrée d'eau du réservoir d'eau sous pression (2) pour empêcher l'eau dans le réservoir d'eau sous pression (2) de s'écouler en arrière vers l'extérieur ;
la deuxième vanne anti-retour (7) est disposée entre la sortie d'eau du réservoir de pression (2) et la vanne de mélange d'eau (9) pour empêcher l'eau de s'écouler à nouveau vers le réservoir de pression (2) ; et
La troisième vanne anti-retour (34) est disposée sur le côté du port de drainage du réservoir d'eau chaude domestique pour empêcher l'eau de refluer vers le réservoir d'eau de conservation thermique (3).

10. L'unité d'eau chaude selon la revendication 1, dans laquelle la sortie d'eau du réservoir d'eau sous pression (2) est disposée dans une partie inférieure du réservoir d'eau sous pression (2) ; et/ou
La sortie d'eau et/ou le port de drainage du réservoir d'eau de conservation de chaleur (3) sont disposés à la partie inférieure du réservoir d'eau de conservation de chaleur (3) ; et/ou le réservoir d'eau de conservation de chaleur (3) est en outre équipé d'une entrée d'eau pour se connecter à un tuyau de retour d'eau domestique (4).
